Europäisches Patentamt

European Patent Office

Office européen des brevets

(11) Numéro de publication: **0 431 511 A1**

## (12) DEMANDE DE BREVET EUROPEEN

(21) Numéro de dépôt: 90123075.5

(51) Int. Cl.5: **H04L 12/56**

(22) Date de dépôt: **03.12.90**

(30) Priorité: **07.12.89 FR 8916191**

(43) Date de publication de la demande:
**12.06.91 Bulletin 91/24**

(84) Etats contractants désignés:
**AT BE CH DE DK ES FR GB IT LI NL SE**

(71) Demandeur: **ALCATEL CIT**
**12 Rue de la Baume**
**F-75008 Paris(FR)**

(72) Inventeur: **Le Bihan, Gérard**
**7, rue du Mouton Blanc**
**F-22300 Lannion(FR)**

(74) Mandataire: **Weinmiller, Jürgen et al**
**Lennéstrasse 9 Postfach 24**
**W-8133 Feldafing(DE)**

(54) **Réseau local de transmission de données.**

(57) L'invention concerne un réseau local de transmission de données permettant des débits élevés, jusqu'à 600 Mégabits/s pour chaque station. Un exemple de réalisation comporte :

- un premier réseau de connexion à multiplexage temporel asynchrone (17), pour établir des premiers circuits virtuels semi-permanents;
- un second réseau de connexion à multiplexage temporel asynchrone (18), pour établir des seconds circuits virtuels semi-permanents utilisés pour secourir des premiers circuits virtuels dans lesquels il y aurait des pertes de données;
- seize stations (1 à 16), chaque station comportant des moyens (19) pour échanger des informations sous la forme de cellules de longueur fixée, selon un protocole de communication adapté aux réseaux de connexion à multiplexage temporel asynchrone, en attribuant à chaque cellule une étiquette désignant l'un des circuits virtuels semi-permanents.

FIG.1

EP 0 431 511 A1

## RÉSEAU LOCAL DE TRANSMISSION DE DONNÉES

L'invention concerne un réseau local de transmission de données, pour relier entre elles des stations et leur permettre de partager leurs ressources, avec un débit très élevé pouvant atteindre 600 Mégabits par seconde.

Plusieurs types de réseau local sont connus. Un premier type comporte un bus sur lequel toutes les stations sont reliées en parallèle. Le protocole d'accès à ce bus est décrit dans la norme IEEE 802.3. Ce protocole d'accès consiste essentiellement, pour chaque station, à contrôler la disponibité du bus avant de transmettre des données sur celui-ci. Un deuxième type de réseau local, appelé anneau à jeton, comporte une liaison en forme d'anneau transitant par chacune des stations, celles-ci répétant les informations transmises sur l'anneau. Quand le bus est disponible, un jeton, constitué par un mot binaire, circule dans cet anneau et peut être intercepté par une station qui souhaite transmettre des données sur l'anneau. Ce protocole est décrit par la norme IEEE 802.5. Un troisième type de réseau local comporte un bus à jeton, les stations étant reliées physiquement à un bus et logiquement à un anneau. Le protocole correspondant est décrit par la norme IEEE 802.4.

Ces réseaux locaux de types connus ont pour inconvénient d'être relativement lents, car leur fonctionnement repose sur un dialogue qui est assez complexe et dont la durée dépend à la fois de la technologie du matériel et de la longueur des câbles reliant les stations. Le débit possible est de l'ordre de 10 Mégabits par seconde. Un quatrième type de réseau local comporte un autocommutateur privé numérique, à intégration de services, commutant des voies synchrones. Les différents services sont fournis par des serveurs séparés, en particulier un serveur pour la commutation de paquets de données. Ce type de serveur a une structure qui limite le débit des voies de données à 2 Mégabits par seconde.

Le but de l'invention est de proposer un réseau local permettant d'atteindre des débits beaucoup plus élevés, jusqu'à 600 Mégabits/seconde. L'objet de l'invention est un réseau local comportant, comme support, un réseau de connexion à multiplexage temporel asynchrone, chaque station comportant des moyens pour mettre en oeuvre un protocole offrant les services d'accès à un support quelconque, qui sont définis dans les normes IEE 802, et pour mettre en oeuvre un protocole de transmission de données sous forme de cellules ayant un format normalisé pour la transmission en mode temporel asynchrone

Selon l'invention un réseau local de transmission de données, est caractérisé en ce qu'il comporte :

- au moins un premier réseau de connexion à multiplexage temporel asynchrone, pour établir des premiers circuits virtuels semi-permanents;
- une pluralité de stations, chaque station comportant des moyens pour échanger des informations sous la forme de cellules, selon un protocole de communication adapté aux réseaux de connexion à multiplexage temporel asynchrone, chaque cellule comportant une étiquette désignant l'un des circuits virtuels semi-permanents; ces moyens comportant au moins une entrée et une sortie couplées respectivement à une entrée et une sortie du premier réseau de transfert.

Selon une autre caractéristique, il comporte un second réseau de connexion à multiplexage temporel asynchrone pour doubler les liaisons entre stations, et chaque station comporte des moyens pour détecter les défauts de transmission et pour y rémédier en décidant de transmettre des informations soit par le premier réseau, soit par le second réseau.

L'invention sera mieux comprise et d'autres détails apparaîtront à l'aide de la description ci-dessous et des figures l'accompagnant :

- la figure 1 représente le schéma synoptique d'un premier exemple de réalisation du réseau local selon l'invention, pour relier 16 stations;
- la figure 2 représente le schéma synoptique d'un deuxième exemple de réalisation du réseau local selon l'invention, pour relier 128 stations;
- la figure 3 représente le schéma synoptique d'un troisième exemple de réalisation du réseau local selon l'invention, pour relier 240 stations;
- les figures 4 à 6 illustrent une procédure de transmission de données, et plus particulièrement l'attribution d'étiquettes aux cellules transportant des données;
- la figure 7 illustre la mise en oeuvre d'un protocole pour remédier aux défauts de transmission.

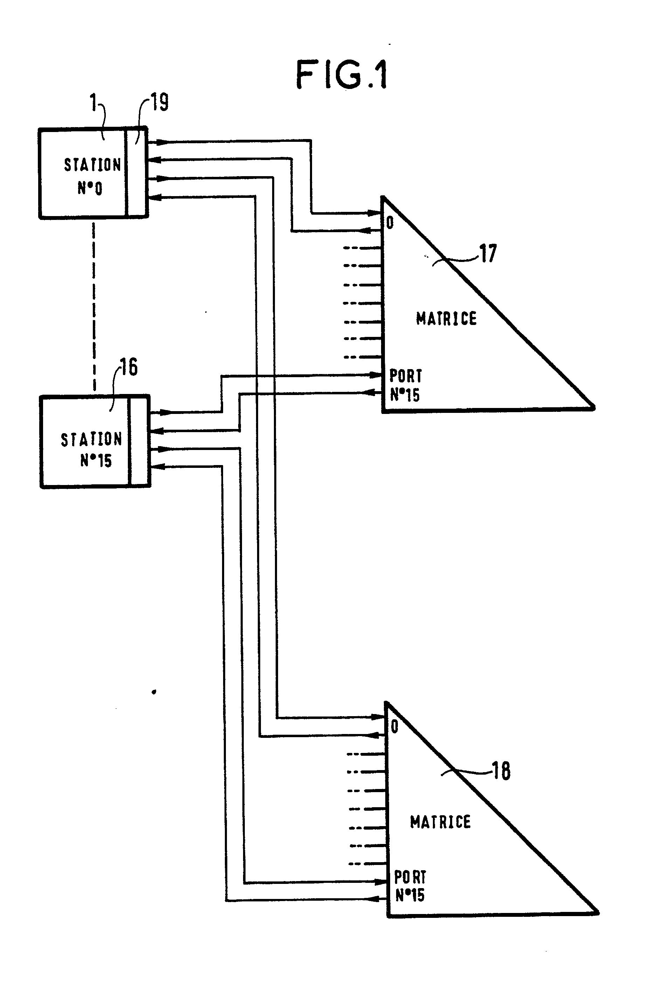

L'exemple de réalisation représenté sur la figure 1 comporte 16 stations, 1 à 16, et deux matrices, 17 et 18, de connexion temporelle asynchrone, comportant chacune 16 ports constitués d'une entrée et d'une sortie. Chacune des stations comporte un circuit de traitement de protocole, 19, pour échanger des informations. Le circuit 19 possède : une première sortie et une première entrée reliées respectivement à l'entrée et à la sortie d'un port de la matrice 17; et une seconde sortie et une seconde entrée reliées respectivement à l'entrée et à la sortie d'un port homologue de la matrice 18.

Les matrices 17 et 18 sont des matrices de type connu dans le domaine de la commutation temporelle asynchrone pour télécommunications. Chaque circuit de traitement de protocole, 19, transmet et reçoit des données sous la forme de cellules, selon un protocole de communications adapté aux réseaux de connexion à multiplexage temporel asynchrone. Chaque cellule comporte une étiquette permettant d'établir un circuit virtuel pour l'acheminer vers une station destinataire. Chaque cellule comporte en outre un mot de contrôle et un champ total de contrôle servant à la détection d'erreur. Un tel protocole est décrit par exemple dans l'article de J.Coupaye, G. Gastaud, G. Le Bihan : "Nouveau protocole pour la transmission de données en cellules MTA" Revue des télécommunications, vol 62, numéro 3-4 1988, pages 338-342.

Ce protocole assure : la détection des erreurs de transmission, cellule par cellule; la détection des pertes, et des ajouts de cellules; la fragmentation d'un message en cellules, avant une transmission; et un désentrelacement des cellules relatives à plusieurs messages, au moment de la réception. Ce protocole assure les fonctions de la sous-couche n° 1 de la couche n° 2 de liaison logique, dans le modèle de référence de l'International Standardization Organisation. Chaque circuit 19 peut être un circuit classique de traitement de protocole, constitué, par exemple, d'un réseau de cellules logiques programmables tel que le composant XC 3090 de la société XILINX.

Les matrices 17 et 18 établissent des circuits virtuels semi-permanents, entre les stations 1 à 16, pour permettre deux types de communication : des communications bidirectionnelles, d'une station à une autre station unique; et des communications de diffusion, d'une station vers toutes les autres stations. La structure des étiquettes permettant d'établir ces circuits virtuels semi-permanents sera décrite plus loin.

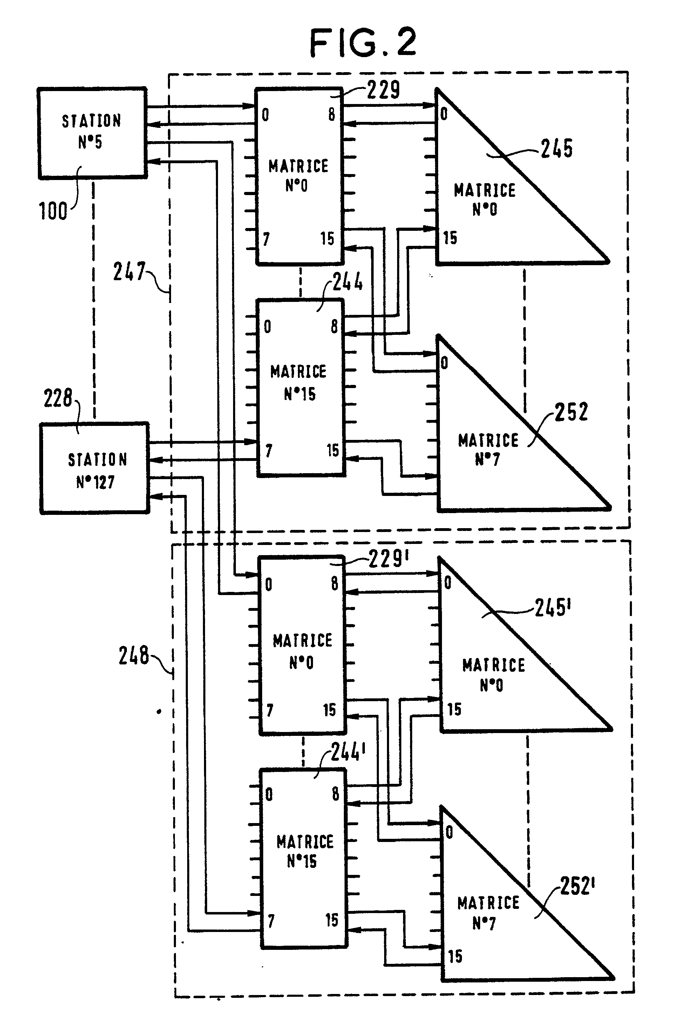

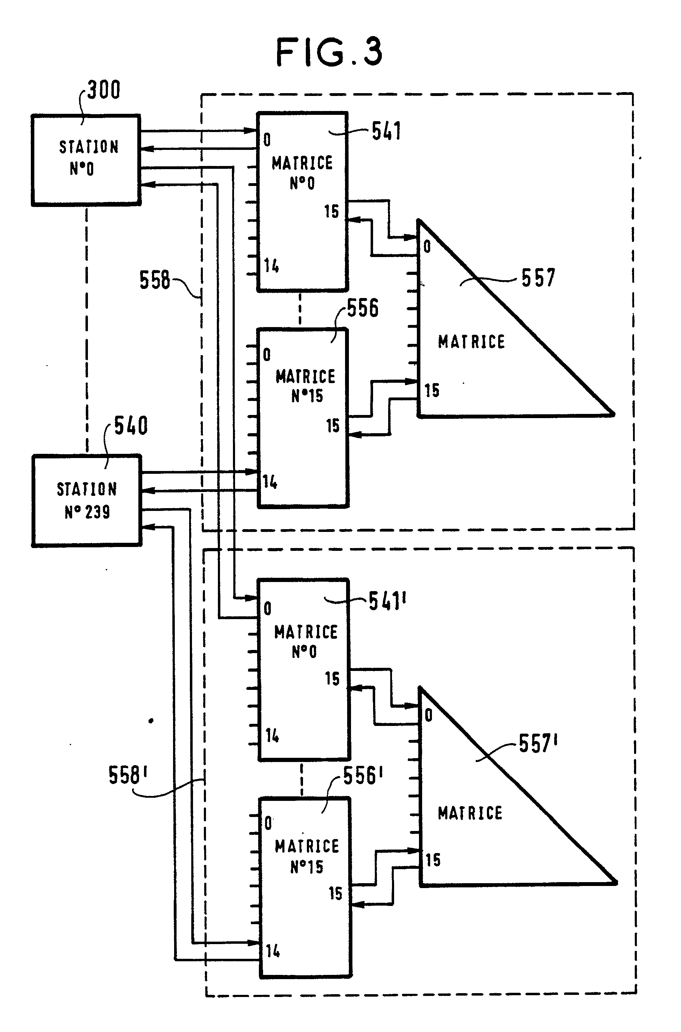

Les matrices 17 et 18 fonctionnent en parallèle. Le circuit 19 de traitement de protocole met en oeuvre un protocole permettant de détecter les défauts de transmission et d'y remédier grâce au doublement des circuits virtuels réalisé ainsi. Ce protocole sera décrit plus loin. La même structure d'étiquette et les mêmes protocoles peuvent être mis en oeuvre pour un nombre quelconque de stations, et avec des architectures de réseau variées. Les figures 2 et 3 représentent d'autres exemples d'architecture de réseaux.

La figure 2 représente le schéma synoptique d'un deuxième exemple de réalisation du réseau local selon l'invention, pour 128 stations, 100 à 228. Les stations possèdent chacune un circuit de traitement de protocole analogue au circuit 19 décrit précédemment. Chacune possède une première entrée et une première sortie reliées respectivement à une sortie et à une entrée constituant un port d'un premier réseau 247 de commutation à multiplexage temporel asynchrone. Chaque station possède en outre une seconde entrée et une seconde sortie reliées respectivement à une sortie et à une entrée constituant un port d'un second réseau 248 de commutation à multiplexage temporel asynchrone. Ces deux réseaux permettent d'assurer la sécurité de la transmission des données en doublant les circuits virtuels établis entre les stations.

Les réseaux 247 et 248 sont rigoureusement identiques. Les composants du réseau 248 qui sont homologues aux composants du réseau 247 portent la même référence avec l'indice ' . Le réseau 247 est constitué d'un premier étage comportant 16 matrices, 229 à 244, comportant chacune 16 ports; et d'un second étage constitué de 8 matrices, 245 à 252, comportant chacune 16 ports, et qui sont identiques aux matrices 229 à 244. Les ports sont numérotés de 0 à 15. Les ports n°8 des 16 matrices du premier étage sont reliés respectivement aux 16 ports de la matrice 245 qui est la matrice de numéro 0 dans le second étage. Les ports n° 9 des 16 matrices du premier étage sont reliés respectivement au 16 ports d'une matrice 246 non représentée, et qui constitue une matrice n° 1 du second étage. De manière analogue, les ports 10, 11, 12, 13, 14, 15 des 16 matrices du premier étage sont reliés à des ports des matrices n°2 à n° 7 du second étage.

Cette structure du réseau de connexion 247 et du réseau 248 permet de relier 128 stations en autorisant toutes les stations à transmettre des données avec le débit maximal-permis par chaque port des matrices, c'est-à-dire 600 Mégabits/s. Autrement dit, le fait qu'une station, ou plusieurs, transmettent avec ce débit ne réduit en aucune façon le débit possible pour les autres stations.

C'est un avantage important par rapport aux réseaux locaux de type connu.

La figure 3 représente le schéma synoptique d'un exemple de réalisation du réseau local selon l'invention, permettant de relier 240 stations, au moyen de deux réseaux, 558 et 558', de connexion multiplexage temporel asynchrone. Cet exemple de réalisation diffère du précédent par le fait que chacun de ces réseaux est plus simple mais n'autorise pas les stations à avoir simultanément le débit maximal permis par chaque port d'une matrice.

Le débit moyen autorisé pour chaque station est d'environ 30 Mégabits/s. Si chacune des stations transmet des données avec un débit inférieur à cette valeur il n'y a pas de perte de données, en principe. Si l'une des stations, au moins, transmet des données avec un débit supérieur à cette valeur, il y a un risque de saturation d'au moins une file d'attente dans l'un des réseaux de connexion, et donc un risque de perte de données. Le réseau 558' double les circuits virtuels établis par le réseau 558 afin de remédier aux pertes de données éventuelles. Cependant cette sécurité ne peut pas être assurée si des stations ont un débit supérieur à la valeur de 30 Mégabits/s.

Les réseaux 558 et 558' comportent des composants identiques. Les composants du réseau 558' qui sont homologues aux composants du réseau 558 sont désignés par les mêmes références avec l'indice '. Le réseau 558 comporte un premier étage constitué de 16 matrices, 541 à 556, ayant chacune 16 ports. Il comporte un second étage constitué d'une matrice unique 557, ayant 16 ports et étant identique à chacune des matrices 541 à 556.

Chacune des stations 300 à 540 possède une première entrée et une première sortie reliées respectivement à une sortie et à une entrée constituant un port du réseau 558. Chacune de ces stations possède une seconde entrée et une seconde sortie reliées respectivement à une sortie et à une entrée constituant un port du réseau 558'. Les ports des matrices 541 à 557 sont numérotés de 0 à 15.

Les ports n° 0 à 14 des matrices 541 à 556 du premier étage constituent 240 ports du réseau 558, qui sont reliés aux stations 300 à 540. Les ports n° 15 des 16 matrices 541 à 556 du premier étage sont reliés respectivement aux 16 ports, n° 0 à 15, de la matrice 557 constituant le second étage. Il apparaît donc que la structure de ce réseau comporte 15 matrices de moins, que la structure du réseau 247 décrit précédemment. Le nombre maximal de circuits virtuels être pouvant établis est beaucoup réduit. L'ensemble du traffic d'une matrice du premier étage, 541 par exemple, est concentré sur un seul multiplex vers la matrice 557 du second étage. Ceci explique la possibilité de blocage et donc les limitations de débit mentionnées précédemment.

L'invention ne se limite pas aux exemples de réalisation décrits précédemment. Il est à la portée de l'homme de l'art de réaliser d'autres réseaux de connexion à multiplexage temporel asynchrone, en combinant plusieurs étages de matrices élémentaires de type connu. Dans certaines applications, il est possible de supprimer les seconds réseaux de connexion 18, 248, 558', si la perte de données occasionnellement n'est pas un défaut rédhibitoire.

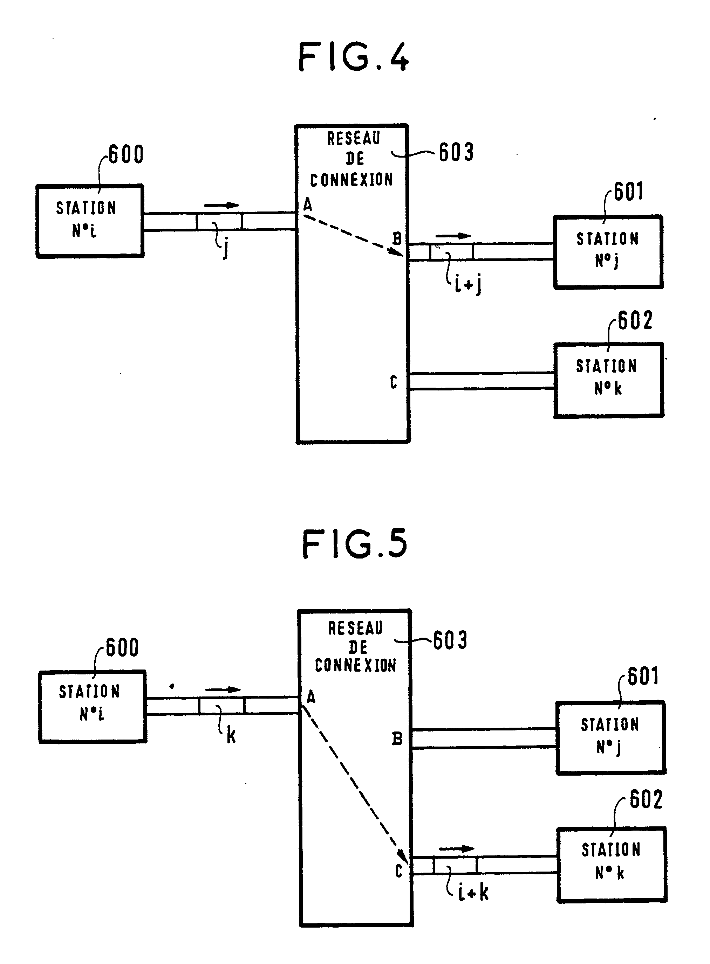

Les figures 4 à 6 illustrent le procédé d'attribution des étiquettes des cellules de données, dans un exemple de réalisation du réseau local selon l'invention. Une liaison d'une première station, émettant des données, vers une seconde station, recevant ces données, est constituée d'un circuit virtuel d'émission, allant de la première station jusqu'au réseau de connexion, et d'un circuit virtuel de réception allant du réseau de connexion jusqu'à la seconde station. Le circuit virtuel d'émission est identifié par l'étiquette que comporte chaque cellule de données émise sur ce circuit virtuel par la première station. Le circuit virtuel de réception est identifié par l'étiquette que comporte chaque cellule de données émise sur ce circuit virtuel par le réseau de connexion. Classiquement, dans un commutateur de télécommunications comportant un réseau de connexion à multiplexage temporel asynchrone, le réseau extraie l'étiquette d'une cellule entrant dans le réseau et l'analyse. Il en déduit : l'acheminement de cette cellule, c'est-à-dire vers quelle sortie restituer les informations; et une nouvelle étiquette à attribuer à la cellule, sur cette sortie. Un réseau de signalisation permet aux terminaux destinataires d'établir la correspondance entre les étiquettes des cellules et les identités de ces terminaux. Dans le réseau local selon l'invention, il n'y a pas de réseau de signalisation, les connexions sont semi-permanentes et les stations comportent des circuits de traitement de protocole l9 qui connaissent la signification des étiquettes attribuées aux cellules.

La figure 4 illustre le cas où une station 600 portant un numéro i transmet des données à une station 601 portant un numéro j, via un réseau de connexion à multiplexage temporel asynchrone 603, tel que l'un de ceux décrits précédemment en relation avec les figures 1 à 3. Dans cet exemple, une troisième station, 602, porte un numéro k. Ces trois stations sont reliées respectivement à des ports A, B, C du réseau de connexion 603. Chaque station utilise, en émission, un circuit virtuel de point à point pour émettre vers une autre station séparément, et utilise un circuit virtuel de diffusion vers l'ensemble des autres stations, pour transmettre des données simultanément à toutes les stations. Chaque station utilise, en réception, un circuit virtuel de point à point pour recevoir des données de chacune des autres stations séparément; et utilise un circuit virtuel de diffusion pour recevoir des données transmises à partir d'une station en direction de toutes les autres.

Le circuit de traitement de protocole, 19, attribue une étiquette à une cellule à transmettre, et reconnaît une étiquette d'une cellule à recevoir. Ces étiquettes identifient les circuits virtuels semi-permanents rencontrés par ces cellules au cours de leur acheminement.

La figure 4 illustre la transmission de données de la station n° i vers la station n°j. Le circuit virtuel d'émission de point à point, partant de la station n°i, porte alors le n° j de la station destinataire. Le circuit virtuel de réception de point à point, arrivant à la station destinataire n° j porte le n° i + j.

La figure 5 illustre la transmission de données de la station n° i vers la station n° k. Le circuit virtuel d'émission de point à point partant de la station n° i porte alors le numéro k de la station destinataire. Le circuit virtuel de réception de point à point arrivant à la station destinataire n° k, porte alors le numéro i + k.

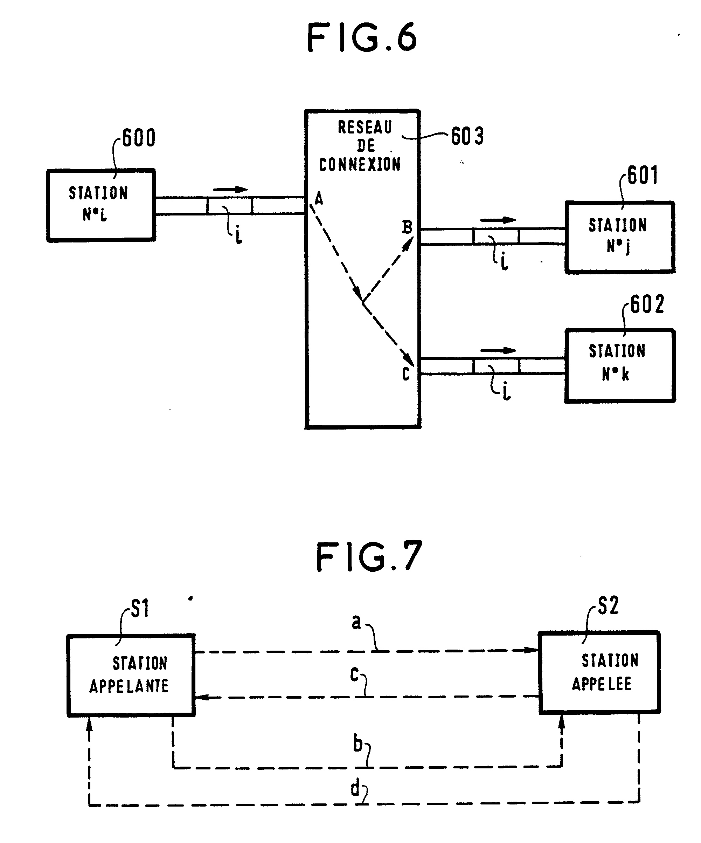

La figure 6 illustre la diffusion de données de la station n° i vers l'ensemble des autres stations du réseau. Le circuit virtuel d'émission de diffusion, partant de la station n° i, porte le numéro i. Le circuit virtuel de réception de diffusion, arrivant vers la station n° j et vers la station n° k, porte lui aussi le numéro i. Ainsi les stations peuvent distinguer sans ambiguïté les cellules de données qui sont adressées individuellement et les cellules de données qui sont adressées à toutes simultanément.

La figure 7 illustre le protocole de sécurité mis en oeuvre pour remédier aux défauts de transmission, qui sont dûs généralement à des pertes de données par débordement d'une file d'attente du réseau de connexion.

Selon l'invention, pour transmettre des données d'une station S1, appelée station appelante à une station S2 appelée station appelée, le protocole consiste essentiellemnt à émettre par la station S1 des données sur une première liaison allant de S1 à S2, notée a; attendre un accusé de réception émis par la station S2 sur une première et une seconde liaison allant de S2 à S1, notées c et d; et réémettre les mêmes données sur une seconde liaison allant de S1 à S2, notée b, si la station appelante S1 ne reçoit pas d'accusé de réception envoyé par la station appelée, S2.

Chacune des deux stations en liaison reçoit parallèlement sur deux liaisons : c et d pour S1, a et b pour S2. Les deux stations sélectionnent chacune indépendamment une liaison virtuelle d'émission parmi deux : a ou b pour S1; c ou d pour S2.

Considérons plus en détail ce protocole. Le but de ce protocole de sécurité est de commuter d'une liaison dite normale à une liaison dite de secours, et réciproquement, sans interrompre une connexion de transfert établie entre deux stations. Toutes les unités de données du protocole de transport sont utilisées. Le protocole de sécurité consiste à allouer à une connexion de transfert au moins quatre liaisons unidirectionnelles constituées de circuits virtuels, deux dans chaque direction. Une liaison a et une liaison b de la station appelante S1 à la station appelée S2; une liaison c et une liaison d de la station appelée, S2, vers la station appelante S1. Un seul circuit virtuel, par exemple a, est utilisé normalement pour émettre de S1 à S2. La liaison choisie est la liaison ayant été utilisée pour envoyer à S2 une demande de connexion. Dans le sens S2 à S1 la liaison utilisée est celle sur laquelle est envoyée par S2 la confirmation de connexion. La réception est assurée simultanément sur les liaisons a et b par la station S2. La réception est assurée simultanément par la station S1 sur les liaisons c et d.

La commutation d'une liaison normale à une liaison de secours dépend des critères suivants :

- Pendant une phase de connexion : La station appelante S1 commute sur un circuit virtuel établissant la liaison de secours, b lorsque la station S1 n'a pas reçu de confirmation de connexion ni de demande de déconnexion, après avoir envoyé n1 fois une demande de connexion sur le circuit virtuel de la liaison, a, qui est actif à l'instant considéré. Cette commutation est réalisée aussi dans le cas où la station SI a reçu m1 fois la même confirmation de connexion, ce qui prouve que la station S2 ne reçoit pas d'accusé de réception ni de données émis par S1. La station appelée, S2, commute sur un circuit virtuel de secours, utilisant la liaison d, si la station S2 a reçu n1 fois la même demande de connexion sur l'une des deux liaisons a ou b, ce qui prouve que l'accusé de réception envoyé par S2 sur la liaison c n'est pas parvenu à la station S1; ou bien dans le cas où la station S2 ne reçoit pas d'accusé de réception ni de données après avoir envoyé m1 fois la même confirmation de connexion sur la liaison c ou d qui est active à l'instant considéré.

- Pendant une phase de transfert de données : La station appelante S1 commute sur la liaison de secours b si elle a envoyé n2 fois les données sur la liaison a qui est active à l'instant considéré, sans recevoir d'accusé de réception. La station appelée, S2, commute sur la liaison de secours d si elle reçoit les mêmes données m2 fois, ce qui prouve que son accusé de réception n'est pas parvenu à la station appelante S1. La station S1 commute aussi vers la liaison de secours b lorsqu'elle ne reçoit pas d'accusé de réception de test d'inactivité, après avoir envoyé n2 fois une requête de test d'inactivité. La station S2 commute aussi sur la liaison de secours d lorsqu'elle reçoit n2 fois la même requête de test d'inactivité sur une même liaison a ou b, ceci se produisant si son accusé de réception ne parvient pas à la station S1.

- Pendant une phase de libération : La station S1 commute sur la liaison de secours b lorsqu'elle ne reçoit aucune confirmation de déconnexion après avoir envoyé n3 fois une requête de déconnexion sur la liaison a qui est active à l'instant considéré. La station 52 commute sur la liaison de secours d si elle reçoit m3 fois la même requête de déconnexion, sur la liaison c, ce qui signifie que son accusé de réception n'est pas parvenu à S1.

- Pendant une phase de réinitialisation : la station S1 commute sur la liaison de secours b si elle ne reçoit pas d'accusé de réception de réinitialisation après avoir envoyé n2 fois un ordre de réinitialisation à la station S2; ou bien si elle reçoit m2 fois un accusé de réception de réinitialisation. La station appelée S2 commute sur la liaison de secours d si elle reçoit m2 fois l'ordre de réinitialisation; ou bien si elle ne reçoit aucun accusé de réception après avoir envoyé n2 fois un accusé de réception d'initialisation, ce qui signifie que cet accusé de réception n'est pas parvenu à la station S1.

Les valeurs de n1, n2, n3, m1, m2, m3 peuvent être prises égales à 2, par exemple.

## Revendications

1. Réseau local de transmission de données, caractérisé en ce qu'il comporte :
   - au moins un premier réseau de connexion à multiplexage temporel asynchrone (17), pour établir des premiers circuits virtuels semi-permanents;
   - une pluralité de stations (1 à 16), chaque station comportant des moyens (19) pour échanger des informations sous la forme de cellules, selon un protocole de communication adapté aux réseaux de connection à multiplexage temporel asynchrone, chaque cellule comportant une étiquette désignant l'un des circuits virtuels semi-permanents; ces moyens comportant au moins une entrée et une sortie couplées respectivement à une entrée et une sortie du premier réseau de transfert (17).

2. Réseau selon la revendication 1, caractérisé en ce que pour améliorer la sécurité de transmission des données, il comporte au moins un second réseau de connexion à multiplexage temporel asynchrone (18) établissant de seconds circuits virtuels semi-permanents, chaque station comportant une seconde entrée et une seconde sortie reliées respectivement à une sortie et à une entrée du second réseau de connexion;

et en ce que les moyens (19) pour échanger des informations comportent des moyens pour détecter des défauts de transmission et pour décider de transmettre des cellules de données soit par le premier, soit par le second réseau (17, 18).

3. Réseau selon la revendication 1, caractérisé en ce que les moyens (19) pour échanger des informations comportent des moyens pour :
   attribuer à chaque cellule de données, à transmettre d'une première station (600) à une seconde station (601) unique, une étiquette fixée (j) désignant la seconde station (601);

   et attribuer à chaque cellule de données, à transmettre d'une première station (600) à une pluralité de secondes stations (601 et 602), une étiquette fixée (i) désignant seulement la première station (600).

4. Réseau selon la revendication 1, caractérisé en ce que les moyens (19) pour échanger des informations comportent des moyens pour :
   reconnaître, dans une cellule de données reçue, une étiquette (i) désignant une station appelante (600), dans le cas d'un appel de diffusion;

   et reconnaître une étiquette (i + j) désignant à la fois une station appelante et une station appelée (601), dans le cas d'un appel à une station unique (601).

5. Réseau selon la revendication 2, caractérisé en ce que les moyens (19) pour échanger des informations comportent des moyens pour :
   transmettre sur une seule liaison (a) sélectionnée parmi une pluralité de liaisons (a, b) établies en direction d'une station appelée (S2);

   recevoir en parallèle sur une pluralité de liaisons (c, d) en provenance de la même station appelée (S2);

   et émettre ensuite sur une liaison différente (b) établie en direction de la station appelée (S2), si aucune information n'est reçue en provenance de la station appelée (S2).

# FIG.1

# FIG. 2

# FIG.3

# FIG.4

# FIG.5

# FIG.6

# FIG.7

11

**Office européen
des brevets**

**RAPPORT DE RECHERCHE
EUROPEENNE**

Numéro de la demande

**EP 90 12 3075**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 260 043 (ATT)<br>* Colonne 1, ligne 50 - colonne 3, ligne 10; colonne 3, ligne 45 - colonne 4, ligne 25; colonne 5, ligne 24 - colonne 7, ligne 32; colonne 12, lignes 12-32; colonne 25, ligne 16 - colonne 27, ligne 10; figures 1-3,15-16 *<br>– – – | 1 | H<br>04 L 12/56 |
| Y<br>A | | 1<br>2 | |
| Y | EP-A-0 234 191 (NEC)<br>* Colonne 1, ligne 34 - colonne 2, ligne 51; colonne 3, ligne 44 - colonne 4, ligne 48; colonne 10, ligne 7 - colonne 11, ligne 31; figures 1,2,7-11 *<br>– – – | 1 | |
| A | | 2,5 | |
| A | EP-A-0 224 895 (ATT)<br>* Page 3, ligne 12 - page 7, ligne 23; page 11, ligne 22 - page 15, ligne 10; figures 2-4 *<br>– – – | 1,2,5 | |
| A | EP-A-0 260 364 (WASHINGTON UNIVERSITY)<br>* Colonne 3, ligne 41 - colonne 5, ligne 47; figures 1-3 *<br>– – – – – | 1,3,4 | |
| | | | **DOMAINES TECHNIQUES RECHERCHES (Int. Cl.5)**<br><br>H 04 L |

Le présent rapport de recherche a été établi pour toutes les revendications

| Lieu de la recherche | Date d'achèvement de la recherche | Examinateur |
|---|---|---|
| La Haye | 27 février 91 | CANOSA ARESTE C. |